# EUROPÄISCHE PATENTSCHRIFT

(11) **EP 4 297 374 B1**
(45) Veröffentlichungstag und Bekanntmachung des Hinweises auf die Patenterteilung: **01.01.2025**
(21) Anmeldenummer: 23179926.3
(22) Anmeldetag: 19.06.2023
(51) Int. Cl.: H04L 67/142, H04L 67/2871, H04L 67/568, H04L 69/40, H04L 67/562

(54) **SERVER UND VERFAHREN ZUR KOPPLUNG MEHRERER NETZWERKE**
SERVER AND METHOD FOR COUPLING MULTIPLE NETWORKS
SERVEUR ET PROCÉDÉ DE COUPLAGE DE RÉSEAUX MULTIPLES

(30) Priorität: 22.06.2022 DE 102022115493
(43) Veröffentlichungstag der Anmeldung: 27.12.2023
(73) Patentinhaber: ise Individuelle Software und Elektronik GmbH, 26122 Oldenburg (DE)
(72) Erfinder: Sahm, Christoph, 26131 Oldenburg (DE)
(74) Vertreter: Angerhausen, Christoph

(56) Entgegenhaltungen:
- CN-A- 111 934 956
- US-A1- 2012 278 636
- US-A1- 2017 223 128
- US-A1- 2019 373 435

## Beschreibung

### TECHNISCHES GEBIET

Die vorliegende Erfindung liegt auf dem technischen Gebiet von Computernetzwerken und insbesondere der Verbindung von Teilnehmern unterschiedlicher Netzwerke.

### HINTERGRUND

Beim Routing von Paketen zwischen mehreren Netzwerken, beispielsweise durch ein Gateway, eine Firewall, einen Router oder einen speziellen Server, kommt es immer wieder vor, dass Pakete nicht zugestellt werden können. Ursachen für solche Zustellprobleme können darin liegen, dass Zielgeräte vorübergehend abgeschaltet sind oder aufgrund sinkender Batteriekapazität nicht in der Lage sind, Pakete zu empfangen. Eine weitere mögliche Ursache liegt in einem begrenzten Buffering von Paketen an Zielgeräten: Ist der Buffer eines Zielgeräts vollständig belegt, kann das Gerät kein Paket annehmen.

DE 60 2004 008 415 T2 offenbart die Bereitstellung eines elektronischen Geräts mit einer Netzwerksschnittstelle zur Kommunikation mit einem zweiten Gerät über eine Netzwerkverbindung, die über einen physischen Link abgewickelt wird, der Ausrüstung zum Beenden der Netzwerkverbindung enthält, wenn die Netzwerkverbindung entsprechend einem vordefinierten timeout-Kriterium der Ausrüstung im Leerlauf bleibt, wobei das Gerät so eingerichtet ist, dass es Keep-Alive-Signale über die Verbindung sendet. Das elektronische Gerät sendet die Keep-Alive-Signale entsprechend einer Vielzahl von unterschiedlichen Zeitintervallen, um das vordefinierte Timeout-Kriterium der Ausrüstung zu ermitteln.

Die CN111934956 offenbart ein Verfahren zum Konfigurieren von Netzwerkinformationen eines Zielgerätes.

### ZUSAMMENFASSUNG

Die Erfindung betrifft einen Server zum Vermitteln von Verbindungen zwischen einem ersten Gerät in einem ersten Netzwerk und einem zweiten Gerät in einem zweiten Netzwerk, wobei jedes der beiden Netzwerke weitere Geräte enthält, und wobei der Server eingerichtet ist zum: Empfangen eines Befehls von dem ersten Gerät, wobei der Befehl von einem der weiteren Geräte des ersten Netzwerks stammt und an eines der weiteren Geräte des zweiten Netzwerks adressiert ist und eine Funktion definiert, die auf dem adressierten Gerät angewendet werden soll; Ermitteln des zweiten Geräts anhand der Adressierung des Befehls; Speichern des Befehls; und Übermitteln des Befehls an das zweite Gerät; wobei der Server ferner eingerichtet ist zum Überprüfen, ob eine Verbindung zu dem zweiten Gerät gestört ist, und, falls die Verbindung gestört ist, für jedes der weiteren Geräte des zweiten Netzwerks den für dieses Gerät zuletzt gespeicherten Befehl erneut an das zweite Gerät zu übermitteln, sobald die Verbindung nicht mehr gestört ist.

Weitere Ausführungsformen werden durch die beigefügten Ansprüche definiert.

### KURZE BESCHREIBUNG DER ZEICHNUNGEN

Figur 1 zeigt ein beispielhaftes System gemäß einer Ausführungsform der Erfindung.
Die Figuren 2 bis 7 zeigen Verfahren gemäß Ausführungsformen der Erfindung.

### AUSFÜHRLICHE BESCHREIBUNG

Im Folgenden wird unter einem Netzwerk ein Verbund von Computern oder anderen netzwerkfähigen Geräten, beispielsweise Mobiltelefonen oder Notebooks, verstanden.

Die Geräte sind in dem Netzwerk miteinander verbunden, beispielsweise mittels Funkverbindungen und/oder über Kabel. Die Geräte werden hier auch als Teilnehmer eines Netzwerks bezeichnet.

Die Geräte können Befehle an andere Geräte des gleichen Netzwerks oder eines anderen Netzwerks übertragen. Die Befehle sind beispielsweise in Pakete eingebettet, die gemäß einem oder mehreren Netzwerkprotokollen übertragen werden.

Die Pakete, und somit die Befehle, weisen eine Herkunftsadresse (Absenderadresse) und eine Zieladresse (Empfängeradresse) auf. Diese Adressen können IP-Nummern darstellen oder eine andere Adressierungsnorm erfüllen, die innerhalb der betroffenen Netzwerke gelten oder in dort geltende Adressen umgewandelt werden können. Die Zieladressen der hier offenbarten Pakete und Befehle können mehr als ein Zielgerät betreffen und beispielsweise alle Geräte eines oder mehrerer Netzwerke oder eine durch den Absender definierte Auswahl von Geräten eines oder mehrerer Netzwerke umfassen. Die Zieladressen können auch gemäß Broadcast- oder Multicastadressen umfassen. In allen hier offenbarten Ausführungsformen können Pakete auch an mehrere Geräte adressiert sein, auch wenn konkret nur ein einziges Zielgerät erwähnt wird.

Eine gestörte Verbindung liegt vor, wenn ein Paket nicht zugestellt werden kann. Dies kann darauf beruhen, dass ein Zielgerät und/oder Zielnetzwerk nicht erreichbar ist, weil die Verbindung dorthin unterbrochen ist, oder weil das Zielgerät oder ein Gerät (Kontaktgerät), das zum Weiterleiten des Pakets an das Zielgerät benötigt, nicht eingeschaltet ist oder geringe Leistungskapazität (Batterie) aufweist. Eine gestörte Verbindung kann durch das Absendergerät erkannt werden mittels wiederholtem Senden von Ping-Paketen oder anderen Testnachrichten oder Aufforderungen an das Zielgerät und/oder Kontaktgerät. Alternativ kann nach jedem Paket, dass ein Gerät erhält, eine Bestätigung (Acknowledgement, ACK) von dem Gerät an den Absender übermittelt werden; bleibt eine solche Bestätigung aus, geht der Absender davon aus, dass die Verbindung gestört ist.

Der in den folgenden Ausführungsformen erläuterte Server ist ein Gerät, das mit zwei oder mehr Netzwerken in Verbindung steht und das eingerichtet ist, Pakete an ein anderes Netzwerk als das Netzwerk des Absenders des Pakets weiterzuleiten. Der Server kann beispielsweise ein Router, eine Firewall, ein Gateway oder ein beliebiges Gerät sein, dass mit den Netzwerken in Kontakt steht.

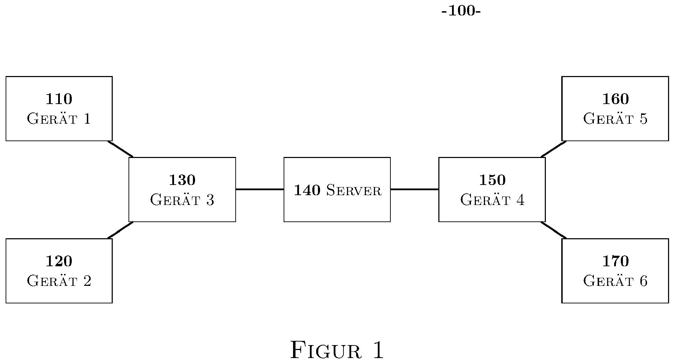

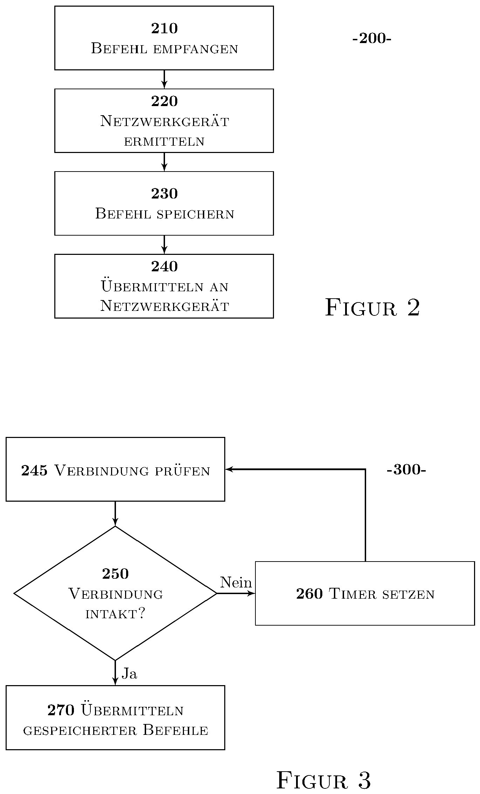

Figur 1 zeigt ein System 100 gemäß einer Ausführungsform der Erfindung. Das System 100 umfasst zwei Netzwerke und einen Server 140. Das erste Netzwerk umfasst die Geräte 110, 120 und 130, kann jedoch auch mehr oder weniger Geräte als gezeigt umfassen. Das zweite Netzwerk umfasst die Geräte 150, 160 und 170, und kann ebenfalls mehr oder weniger Geräte umfassen. Die Geräte 130 und 150 stehen in Verbindung mit dem Server 140 und dienen als Kontaktgerät für ihre jeweiliges Netzwerk. Der Server 140 ist eingerichtet, Pakete zwischen dem ersten Netzwerk und dem zweiten Netzwerk zu übermitteln. Das System 100 dient als Grundlage für die im Folgenden unter Bezugnahme auf Figuren 2 bis 5 erläuterten Ausführungsformen.

Figur 2 zeigt ein Verfahren 200 zum Übermitteln eines Befehls von einem Gerät in dem ersten Netzwerk der Figur 1 an ein Gerät in dem zweiten Netzwerk. Der Befehl stammt beispielsweise von Gerät 110 oder 120 und wird zunächst von dem Gerät 130 empfangen, das mit dem Server 140 verbunden ist. Das Gerät 130 übermittelt den Befehl an den Server 140, beispielsweise aufgrund der Adressierung des Befehls oder dessen Pakets, die anzeigt, dass das Paket nicht innerhalb des ersten Netzwerks zugestellt werden kann, oder aufgrund der räumlichen Anordnung des Servers 140 in einem Sendebereich des Geräts 130. Der Server 140 erhält das Paket in Schritt 210.

In Schritt 220 ermittelt der Server 140 anhand der Adressierung des Pakets/Befehls ein zweites Gerät aus dem Netzwerk des Zielgeräts, beispielsweise das Gerät 150. Das Gerät 150 ist nicht notwendigerweise identisch mit dem Zielgerät des Pakets, sondern dient insbesondere als Zugangspunkt (Kontaktgerät) zu dem zweiten Netzwerk, beispielsweise weil es mit dem Server 140 verbunden ist oder in dessen Sendebereich liegt.

In Schritt 230 speichert der Server 140 das Paket. Dieser Schritt kann in einer Ausführungsform davon abhängen, ob die Verbindung zu dem zweiten Gerät ungestört ist; dies wird weiter unten unter Bezugnahme auf Figur 3 erläutert. Das Paket kann in einer Datenstruktur gespeichert werden, die eine spätere Identifikation des Pakets anhand einer Absender- und/oder Zieladresse des Pakets erlaubt. Schritt 230 umfasst in einer Ausführungsform eine Prüfung einer solchen Datenstruktur, ob für eine Zieladresse des aktuellen Pakets bereits Pakete gespeichert wurden, und löscht diese; somit enthält die Datenstruktur für eine betreffende Adresse immer nur das zuletzt gespeicherte Paket. Alternativ kann diese Prüfung jedoch unterbleiben und das Paket zusätzlich zu früheren Paketen, die zu der Adresse des aktuelleln Pakets gehören, gespeichert werden.

In Schritt 240 übermittelt der Server 140 das Paket an das zweite Gerät 150. Die Schritte 230 und 240 können in beliebiger Reihenfolge ausgeführt werden. Insbesondere kann der Schritt 230 auch früher ausgeführt werden, beispielsweise direkt nach Schritt 210.

Das zweite Gerät 150 leitet das Paket an das Zielgerät weiter, beispielsweise an Gerät 160 oder 170, wo der Befehl ausgeführt wird.

Figur 3 zeigt ein Verfahren 300, das durch den Server 140 ausgeführt wird. Das Verfahren kann als Bestandteil des Verfahrens 200 oder unabhängig von diesem ausgeführt werden.

Mit dem Verfahren 300 prüft der Server 140, ob die Verbindung zu dem ersten Gerät 130 und/oder dem zweiten Gerät 150 oder allgemein zu allen Kontaktgeräten des Servers 140 die Verbindung zu gestört ist. Im Falle einer Störung wird ein zuvor an das betreffende Gerät übermittelter Befehl erneut gesendet, wenn die Störung nicht mehr vorliegt.

In Schritt 245 prüft der Server 140, ob die Verbindung zu einem Gerät, über das der Server 140 mit einem von mehreren Netzwerken verbunden ist, intakt oder gestört ist. Schritt 250 kann beispielsweise im Zuge des Verfahrens 200 ausgeführt werden und somit prüfen, ob das Gerät 150, über das der Server mit dem zweiten Netzwerk verbunden ist, erreichbar ist. Alternativ kann der Server 140 die Prüfung fortwährend, also beispielsweise in regelmäßigen Abständen oder zu vorgegebenen Zeitpunkten durchführen. Außerdem kann die Prüfung jedesmal für jedes Gerät durchgeführt werden, über das der Server mit einem jeweiligen Netzwerk verbunden ist.

Wird in Schritt 250 festgestellt, dass eine Störung vorliegt, richtet der Server in Schritt 260 einen Zeitgeber (Timer) ein und speichert diesen mit einem Hinweis auf das betreffende Gerät. Der Timer kann einfach aus einer aktuellen Zeitangabe und einer Zeitdauer bestehen. Alternativ kann direkt eine Zeitangabe in der Zukunft programmiert werden, beispielsweise mittels Cron-Daemon oder vergleichbarer Mechanismen wie etwa einem Countdown. Das Einrichten des Timers umfasst Setzen des Timers auf einen Startwert und Starten des Timers. In einer Ausführungsform wird für jedes Gerät höchstens ein Timer vorgehalten. Existiert zum Zeitpunkt des Einrichtens bereits ein Timer für das betreffende Gerät, so wird durch das Einrichten der bisherige Wert annulliert und der Timer auf den neuen Wert gesetzt.

Schritt 260 kann ferner umfassen, das erste Gerät und/oder das Absendergerät des empfangenen Befehls über die Störung zu benachrichtigen. In einer Ausführungsform kann ein Anwender per E-Mail oder anderer elektronischer Nachricht, etwa einer Push-Notification, verständig werden. Die hierzu erforderliche Adresse kann der Server entweder aus dem Paket oder Befehl entnehmen oder anhand der Absender- oder Zieladresse des Pakets nachschlagen oder von einem hierzu vorgesehenen weiteren Gerät oder Server abfragen.

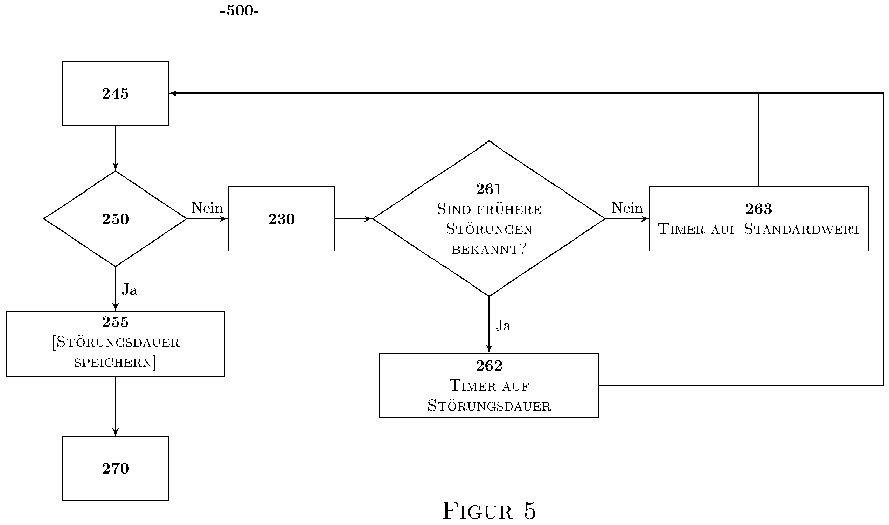

Als Zeitdauer kann ein fester vorbestimmter Wert verwendet werden. Alternativ kann die Zeitdauer dynamisch bestimmt werden. Entsprechende Ausführungsformen werden unten unter Bezugnahme auf Figur 5 erläutert.

Nach Ablauf der Zeitdauer wiederholt der Server 140 das Verfahren 300 ab Schritt 245 und prüft somit erneut, ob die Verbindung zu dem betreffenden Gerät intakt ist.

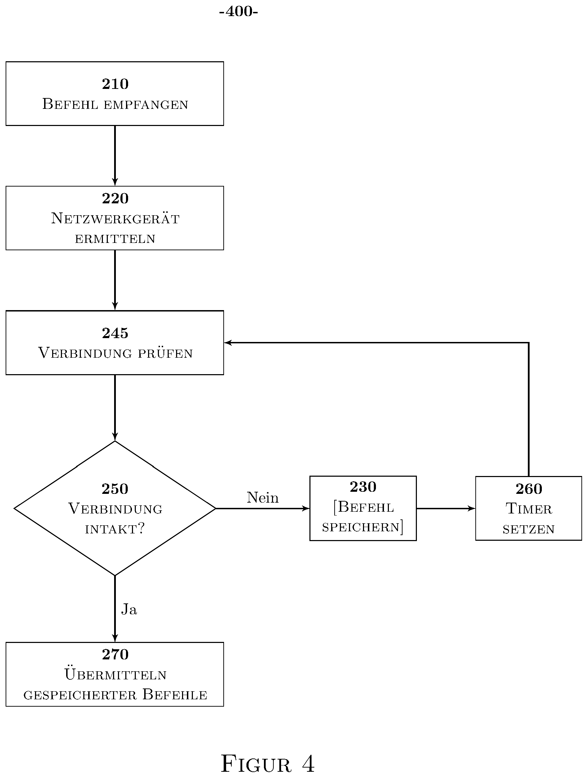

Stellt sich bei Schritt 250 heraus, dass eine Störung nicht (mehr) besteht, übersendet der Server in einer Ausführungsform in Schritt 270 sämtliche gespeicherten Befehle, die an das in Schritt 245 geprüfte Gerät adressiert sind oder über dieses weitergesendet werden sollen, an diese Geräte. Wird das Verfahren 300 als Teil des Verfahrens 200 ausgeführt, kann Schritt 270 den Schritt 240 des Verfahrens ersetzen beziehungsweise Schritt 240 in Verfahren 200 weggelassen werden; ein Beispiel für eine Kombination der Verfahren 200 und 300 wird unten unter Bezugnahme auf Figur 4 erläutert. Sind einzelne Timer der betroffenen Geräte zum Zeitpunkt der Ausführung von Schritt 270 noch in Kraft, können diese abgeschaltet oder entfernt werden.

Wie bereits erwähnt wurde, kann die Prüfung einer Verbindung einen Schritt einschließen, in dem das angesprochene Gerät eines Netzwerks sich zurückmeldet (ACK). Wenn das Übermitteln von Befehlen in Schritt 270 ohne eine solche Rückmeldung bleibt, werden für die betreffenden Geräte neue Timer aufgesetzt (in Figur 3 nicht gezeigt), und das Verfahren ab Schritt 245 nach Ablauf dieser Timer jeweils wiederholt.

Die bisher erläuterten Prüfungsschritte können lediglich eine Prüfung der Verbindung zu demjenigen oder denjenigen Geräten, das/die den Server mit einem jeweiligen Netzwerk verbinden, betreffen; die Timer werden in Verbindung mit diesen Geräten eingerichtet und gespeichert. Alternativ kann allerdings auch der gesamte Pfad zu einem jeweiligen Zielgerät eines Befehls geprüft werden. In diesem Fall wird der Timer in Verbindung mit dem betreffenden Gerät aufgesetzt, und auch der Befehl wird mit dem betreffenden Zielgerät gespeichert (Schritt 230).

Schritt 270 kann das Löschen eines oder mehrerer Befehle umfassen. Ist sichergestellt, dass ein versendeter Befehl seinen Empfänger erreichte, etwa mittels Bestätigung (ACK) oder aufgrund unmittelbar vorhergehender Prüfung einer Verbindung, kann dieser gelöscht werden. Das Löschen eines Befehls umfasst das Löschen eines etwaigen Timers, und umgekehrt.

Durch mehrfache Ausführung der Verfahren 200 und 300 können in dem Server 140 mehrere Befehle anfallen, die alle auf das gleiche Zielgerät gerichtet sind. Wird in Schritt 250 festgestellt, dass eine Störung nicht (mehr) besteht, kann Schritt 270 das Übersenden sämtlicher angefallener Befehle für dieses Gerät umfassen. Zudem kann das Löschen von Befehlen das Löschen sämtlicher Befehle umfassen, die auf ein betreffendes Gerät gerichtet sind.

Wie erwähnt, können die Verfahren 200 und 300 parallel und unabhängig voneinander ausgeführt werden: Verfahren 200 speichert Befehle und leitet sie weiter, und Verfahren 300 prüft Verbindungen und wiederholt die Weiterleitungen, falls erforderlich.

Figur 4 zeigt eine alternative Kombination der Verfahren 200 und 300 als Verfahren 400. Hierbei wird ein Befehl nur unter der Voraussetzung gespeichert, dass die Verbindung gestört ist, Schritt 230. Die übrigen Schritte folgen den bisherigen Erläuterungen. Schritt 230 (Speichern des Befehls) ist eingeklammert, da er bei mehrfachem Durchlauf der Schleife 245, 250, 230, 260 nur einmal ausgeführt werden soll. Eine entsprechende Fallunterscheidung liegt im Belieben des Fachmanns und kann je nach den Umständen durch geeignete Maßnahmen implementiert werden.

Figur 5 zeigt ein Verfahren 500 zur dynamischen Bestimmung von Timer-Werten für jeweilige Zielgeräte oder Netzwerkgeräte, hinter denen ein Zielgerät liegt. Das Verfahren 500 umfasst die Schritte 261, 262 und 263, die den Schritt 260 der Verfahren 300 oder 400 ersetzen können. Ferner ist ein zusätzlicher Schritt 255 gezeigt. Zur Orientierung zeigt die Figur 5 die Schritte 245, 250 und 230 in verkürzter Form.

Wie oben erläutert, kann in einer Schleife der Schritte 245, 250, [230] und 260 wiederholt geprüft werden, ob eine Verbindung zu einem zweiten Gerät oder Zielgerät nach einer Störung wieder intakt ist. Das Verfahren 500 umfasst einen zusätzlichen Schritt 255, der nach ein- oder mehrmaligem Durchlauf dieser Schleife die Störungsdauer für die betreffende Verbindung speichert. Die Störungsdauer ergibt sich aus der Anzahl der Schleifendurchläufe, multipliziert mit dem jeweils gesetzten Timer-Wert. Die Störungsdauer wird gemeinsam mit einer Adresse des zweiten Geräts (Kontaktgerät) und/oder Zielgeräts gespeichert. Die gespeicherte Störungsdauer kann optional den Mittelwert aus einer bisher gespeicherten Störungsdauer und der zuletzt gemessenen Störungsdauer darstellen, oder auch einen Mittelwert aller bisher für diese Verbindung gespeicherten Störungsdauern.

Das gemeinsame Speichern einer Störungsdauer mit einer Adresse des zweiten Geräts kann in einer Ausführungsform die Verwendung eines Bezeichners (ID) des zweiten Geräts umfassen, mit dem das Gerät bei dem Server 140 registriert wurde. Diese ID kann zugleich die Zieladresse des Befehls oder einen Teil dieser Zieladresse darstellen. Die Verwendung registrierter IDs kann auch bei allen anderen hier offenbarten Speicherschritten verwendet werden.

Schritt 261 ermittelt einen geeigneten Zeitwert für den einzurichtenden Timer, nachdem festgestellt wurde, dass die Verbindung gestört ist. Schritt 261 prüft, ob die Verbindung bereits früher gestört war. Dies kann implementiert werden durch Prüfen, ob mit dem betreffenden zweiten Gerät oder Zielgerät bereits eine Störungsdauer gespeichert worden war, in Schritt 255 eines früheren Durchlaufs des Verfahrens 500.

Wird ein solcher Zeitwert vorgefunden, kann dieser in Schritt 262 verwendet werden, um den Timer auf diesen Wert zu setzen. Liegt kein solcher Zeitwert vor, wird der Timer in Schritt 263 auf einen Standardwert gesetzt, beispielsweise einen Mittelwert aller gespeicherten Störungsdauern von Verbindungen, oder auf einen Wert, bei dessen Ablauf nach Erfahrungswerten ein geringer Datenverkehr auf der Verbindung zu erwarten ist. Nach Schritt 262 beziehungsweise Schritt 263 wird das Verfahren bei Schritt 245 fortgesetzt.

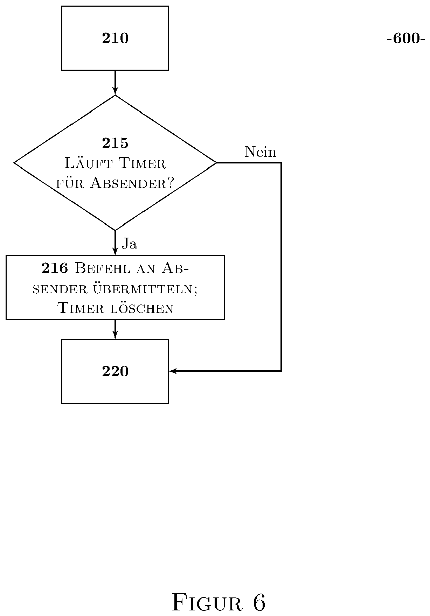

Figur 6 zeigt ein Verfahren 600 mit Schritten 215 und 216, die in eines der bereits vorgestellten Verfahren integriert werden können. Die bisher erläuterten Verfahren sind insbesondere darauf gerichtet, diejenige Verbindung zu prüfen, über die ein an dem Server 140 erhaltenes Paket weitergeleitet werden soll. Ist eine Verbindung gestört, kann ein Timer eingerichtet werden und der Weiterleitungsversuch wiederholt werden.

Das Verfahren 600 richtet sich auf Konstellationen, in denen ein Server von dem ersten Gerät ein Paket zur Weiterleitung an das zweite Gerät erhielt, für dieses (oder ein Zielgerät dahinter) jedoch aufgrund gestörter Verbindung einen Timer einrichten mußte. In dieser Situation kann die Verbindung zwischen dem Server 140 und dem zweiten Gerät (oder Zielgerät) wieder aufleben. Dies bleibt dem Server zunächst verborgen, wenn der Timer noch läuft und kein neuer Datenverkehr an das zweite Gerät zu übermitteln ist. Trifft in dieser Situation jedoch ein Paket von dem zweiten Gerät zur Weiterleitung an das erste Gerät bei Server 140 ein, verfügt dieser über die Information, dass die Verbindung wieder intakt ist. Das Verfahren 600 beschreibt die zu ergreifenden Schritte.

In Schritt 210 erhält der Server 140, wie bereits erläutert, einen Befehl zur Weiterleitung. In Schritt 215 prüft der Server 140 nun, ob für den Absender des Befehls gegenwärtig ein Timer läuft. Ist dies der Fall, versendet der Server 140 in Schritt 216 alte Pakete/Befehle, die für diesen Absender gespeichert wurden, an das Gerät, von dem er den neuen Befehl in Schritt 210 erhielt. In einer Ausführungsform wird Schritt 216 auf sämtliche Geräte angewendet, die den Pfad zu dem Absendergerät bilden. Entsprechende Timer können zurückgesetzt oder gelöscht werden. Anschließend setzt der Server 140 das Verfahren bei Schritt 220 in der gewohnten Weise fort.

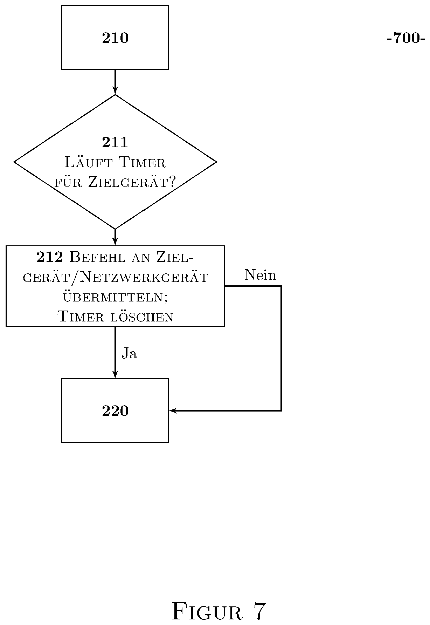

Figur 7 zeigt ein Verfahren 700 mit Schritten 211 und 212, die ebenfalls mit einem der erläuterten Verfahren einschließlich Verfahren 600 kombiniert werden können.

Das Verfahren 700 ist ähnlich wie das Verfahren 600 aufgebaut, prüft aber das Vorliegen von Timern für das Zielgerät anstatt des Absenders eines erhaltenen Pakets. Diese Maßnahme beruht auf der Annahme, dass auch für ein aktuelles Zielgerät bereits Timer gesetzt und Pakete gespeichert wurden und die zuvor gestörte Verbindung zum Zielgerät oder erstem oder zweitem Gerät zwischenzeitlich wieder aktiviert wurde.

Somit prüft der Server 140 nach dem Erhalt eines Pakets (Schritt 210) in Schritt 211, ob für das Zielgerät oder für eine Kontaktgerät, das zum Weiterleiten des Pakets verwendet wird, bereits ein Timer und/oder Paket vorliegt. In einer Ausführungsform können auch sämtliche Geräte geprüft werden, die den Pfad zu dem Zielgerät bilden. Liegt ein Timer vor, versendet der Server in Schritt 212 auch die bereits gespeicherten Pakete an das Zielgerät beziehungsweise die geprüften Geräte und löscht den Timer und die Pakete. In einer Ausführungsform kann die Prüfung des Schritts 211 lediglich das Zielgerät betreffen, während in Schritt 212 sämtliche Pakete zugestellt werden, die an Geräte auf dem Pfad zu dem Zielgerät liegen.

In einer bevorzugten Ausführungsform wird Schritt 212 an einer späteren Stelle in dem übergeordneten Verfahren ausgeführt, beispielsweise unmittelbar vor oder nach Schritt 270.

Ausführungsformen der Erfindung umfassen auch computerlesbare Medien mit darauf gespeicherten Befehlen, die, wenn sie durch einen oder mehrere Prozessoren ausgeführt werden, eines der hier offenbarten Verfahren durchführen.

## Patentansprüche

1. Server (140) zum Vermitteln von Verbindungen zwischen einem ersten Gerät(130) in einem ersten Netzwerk und einem zweiten Gerät (150) in einem zweiten Netzwerk,
wobei jedes der beiden Netzwerke weitere Geräte enthält, und wobei der Server eingerichtet ist zum:
Empfangen eines Befehls von dem ersten Gerät, wobei der Befehl von einem der weiteren Geräte des ersten Netzwerks stammt und an eines der weiteren Geräte des zweiten Netzwerks adressiert ist und eine Funktion definiert, die auf dem adressierten Gerät angewendet werden soll;
Ermitteln des zweiten Geräts anhand der Adressierung des Befehls;
Speichern des Befehls; und
Übermitteln des Befehls an das zweite Gerät;
wobei der Server ferner eingerichtet ist zum Überprüfen, ob eine Verbindung zu dem zweiten Gerät gestört ist, und, falls die Verbindung gestört ist, für jedes der weiteren Geräte des zweiten Netzwerks den für dieses Gerät zuletzt gespeicherten Befehl erneut an das zweite Gerät zu übermitteln, sobald die Verbindung nicht mehr gestört ist.

2. Server nach Anspruch 1, wobei das Prüfen, ob die Verbindung gestört ist, umfasst:
Starten eines Timers als Reaktion einer von dem zweiten Gerät empfangenen Sendung, wobei das Starten ein Zurücksetzen des Timers umfasst, wenn bereits ein Timer für das zweite Gerät gestartet war;
Bei Erreichen einer vordefinierten Dauer durch den Timer: in regelmäßigen Abständen Senden von Testnachrichten an das zweite Gerät, und Erkennen, dass die Verbindung nicht mehr gestört ist, sobald von dem zweiten Gerät wieder eine Sendung empfangen wurde.

3. Server nach Anspruch 1 oder 2, wobei der Server ferner eingerichtet ist zum Benachrichtigen des ersten Geräts, wenn die Verbindung einer Störung unterliegt.

4. Server nach einem der Ansprüche 1 bis 3, wobei das zweite Gerät mit einer Registrierungs-ID bei dem Server registriert ist, wobei der Befehl die Registrierungs-ID des zweiten Geräts enthält, und wobei das Speichern des Befehls auf dem Server anhand der Registrierungs-ID erfolgt.

5. Verfahren, umfassend:
Durch ein erstes Gerät in einem ersten Netzwerk Senden eines Befehls an einen Server, wobei der Befehl von einem weiteren Gerät des ersten Netzwerks stammt und an eines von mehreren Geräten in einem zweiten Netzwerk adressiert ist, mit dem der Server über ein zweites Gerät des zweiten Netzwerks verbunden ist, wobei der Befehl eine Funktion definiert, die auf das adressierte Gerät angewendet werden soll;
Ermitteln (220) des zweiten Geräts anhand der Adressierung des Befehls;
Speichern des Befehls (230) durch den Server; und
Übermitteln des Befehls an das zweite Gerät durch den Server;
Empfangen des Befehls durch das zweite Gerät, und Übermitteln des Befehls an das adressierte Gerät; und
Anwenden der Funktion durch das adressierte Gerät;
wobei der Server fortlaufend überprüft (245), ob eine Verbindung zu dem zweiten Gerät gestört ist, und, falls die Verbindung gestört ist, für jedes der weiteren Geräte des zweiten Netzwerks den für dieses Gerät zuletzt gespeicherten Befehl erneut an das zweite Gerät übermittelt (270), sobald die Verbindung nicht mehr gestört ist.

6. Verfahren nach Anspruch 5, wobei das Prüfen, ob die Verbindung gestört ist, umfasst:
Starten eines Timers als Reaktion einer von dem zweiten Gerät empfangenen Sendung, wobei das Starten ein Zurücksetzen des Timers umfasst, wenn bereits ein Timer für das zweite Gerät gestartet war;
Bei Erreichen einer vordefinierten Dauer durch den Timer: in regelmäßigen Abständen Senden von Testnachrichten an das zweite Gerät, und Erkennen, dass die Verbindung nicht mehr gestört ist, sobald von dem zweiten Gerät wieder eine Sendung empfangen wurde.

7. Verfahren nach Anspruch 5 und 6, ferner umfassend:
Benachrichtigen des ersten Geräts, wenn die Verbindungen einer Störung unterliegt.

8. Verfahren nach einem der Ansprüche 5 bis 7, ferner umfassend:
Vor dem Senden des Befehls von dem ersten Gerät an den Server: Empfangen einer Benutzereingabe durch eines der weiteren Geräte des ersten Netzwerks, und Übermitteln des Befehls an das erste Gerät.

9. Computerlesbares Medium mit darauf gespeicherten Befehlen, die, wenn sie durch einen Prozessor ausgeführt werden, dass Verfahren nach einem der Ansprüche 5 bis 8 durchführen.

## Claims

1. A server (140) for mediating connections between a first device (130) in a first network and a second device (150) in a second network, wherein each of the two networks includes further devices, and wherein the server is configured to:
receive a command from the first device, the command originating from one of the further devices of the first network and being addressed to one of the further devices of the second network and defining a function to be applied on the addressed device;
determine the second device from the addressing of the command;
store the command; and
transmit the command to the second device;
wherein the server is further configured to check if a connection to the second device is disrupted, and if the connection is disrupted, for each of the further devices of the second network, retransmit the command last stored for that device to the second device once the connection is no longer disrupted.

2. The server of claim 1, wherein checking if the connection is disrupted comprises:
starting a timer in response to a transmission received from the second device, wherein starting comprises resetting the timer if a timer for the second device has already been started;
upon reaching a predefined duration by the timer: periodically sending test messages to the second device, and detecting that the connection is no longer disrupted once a transmission has been received again from the second device.

3. The server of claim 1 or 2, wherein the server is further configured to notify the first device if the connection is disrupted.

4. The server of any one of claims 1 to 3, wherein the second device is registered with the server with a registration ID, wherein the command includes the registration ID of the second device, and wherein storing the command on the server is based on the registration ID.

5. A method, comprising:
sending, by a first device in a first network, a command to a server, the command originating from a further device of the first network and being addressed to one of a plurality of devices in a second network to which the server is connected via a second device of the second network, the command defining a function to be applied on the addressed device;
determining (220) the second device from the addressing of the command;
storing, by the server, the command (230); and
transmitting, by the server, the command to the second device;
receiving, by the second device, the command, and transmitting the command to the addressed device; and
applying, by the addressed device, the function;
wherein the server continuously checks (245) if a connection to the second device is disrupted, and if the connection is disrupted, for each of the further devices of the second network, retransmit (270) the command last stored for that device to the second device once the connection is no longer disrupted.

6. The method of claim 5, wherein checking if the connection is disrupted comprises:
starting a timer in response to a transmission received from the second device, wherein starting comprises resetting the timer if a timer for the second device has already been started;
upon reaching a predefined duration by the timer: periodically sending test messages to the second device, and detecting that the connection is no longer disrupted once a transmission has been received again from the second device.

7. The method of claim 5 and 6, further comprising:
notifying the first device if the connections are disrupted.

8. The method of any one of claims 5 to 7, further comprising:
prior to sending the command from the first device to the server: receiving, by one of the further devices of the first network, a user input, and transmitting the command to the first device.

9. A computer-readable medium having stored thereon instructions that, when executed by a processor, perform the method of any one of claims 5 to 8.

## Revendications

1. Serveur (140) pour la transmission de liaisons entre un premier appareil (130) dans un premier réseau et un deuxième appareil (150) dans un deuxième réseau, dans lequel chacun des deux réseaux contient d'autres appareils et dans lequel le serveur est conçu pour :
la réception d'une instruction par le premier appareil, dans lequel l'instruction provient d'un des autres appareils du premier réseau et est adressée à un des autres appareils du deuxième réseau et définit une fonction qui doit être appliquée sur l'appareil adressé ;
la détermination du deuxième appareil à l'aide de l'adressage de l'instruction ;
l'enregistrement de l'instruction ; et
la transmission de l'instruction au deuxième appareil ;
dans lequel le serveur est en outre conçu pour vérifier si une liaison avec le deuxième appareil est perturbée et, si la liaison est perturbée, pour chacun des autres appareils du deuxième réseau, pour transmettre à nouveau la dernière instruction enregistrée pour cet appareil au deuxième appareil, dès que la liaison n'est plus perturbée.

2. Serveur selon la revendication 1, dans lequel la vérification si la liaison est perturbée comprend :
le démarrage d'un minuteur en réaction à un envoi reçu par le deuxième appareil, dans lequel le démarrage comprend une réinitialisation du minuteur lorsqu'un minuteur avait déjà été démarré pour le deuxième appareil ;
lorsqu'une durée prédéfinie est atteinte par le minuteur : à des intervalles réguliers, envoi de messages-tests au deuxième appareil et détection que la liaison n'est plus perturbée dès qu'un envoi a à nouveau été reçu par le deuxième appareil.

3. Serveur selon la revendication 1 ou 2, dans lequel le serveur est en outre conçu pour informer le premier appareil lorsque la liaison subit une perturbation.

4. Serveur selon l'une des revendications 1 à 3, dans lequel le deuxième appareil est enregistré avec un identifiant d'enregistrement dans le serveur, dans lequel l'instruction contient l'identifiant d'enregistrement du deuxième appareil et dans lequel l'enregistrement de l'instruction sur le serveur a lieu à l'aide de l'identifiant d'enregistrement.

5. Procédé comprenant :
à l'aide d'un premier appareil dans un premier réseau, envoi d'une instruction à un serveur, dans lequel l'instruction provient d'un autre appareil du premier réseau et est adressée à un plusieurs appareils dans un deuxième réseau, avec lequel le serveur est relié par l'intermédiaire d'un deuxième appareil du deuxième réseau, dans lequel l'instruction définit une fonction qui doit être appliquée sur l'appareil adressé ;
la détermination (220) du deuxième appareil à l'aide de l'adressage de l'instruction ;
l'enregistrement de l'instruction (230) par le serveur ; et
la transmission de l'instruction au deuxième appareil par le serveur ;
la réception de l'instruction par le deuxième appareil et la transmission de l'instruction à l'appareil adressé ; et
l'application de la fonction par l'appareil adressé ;
dans lequel le serveur est contrôlé (245) en permanence afin de savoir si une liaison avec le deuxième appareil est perturbée et, si la liaison est perturbée, pour chacun des autres appareils du deuxième réseau, transmet (270) l'instruction enregistrée en dernier pour cet appareil à nouveau au deuxième appareil dès que la liaison n'est plus perturbée.

6. Procédé selon la revendication 5, dans lequel la vérification si la liaison est perturbée comprend :
le démarrage d'un minuteur en réaction à un envoi reçu par le deuxième appareil, dans lequel le démarrage comprend une réinitialisation du minuteur lorsqu'un minuteur avait déjà été démarré pour le deuxième appareil ;
lorsqu'une durée prédéfinie est atteinte par le minuteur : à des intervalles réguliers, envoi de messages-tests au deuxième appareil et détection que la liaison n'est plus perturbée dès qu'un envoi a à nouveau été reçu par le deuxième appareil.

7. Procédé selon la revendication 5 et 6, comprenant en outre :
l'information du premier appareil lorsque la liaison subit une perturbation.

8. Procédé selon l'une des revendications 5 à 7, comprenant en outre :
avant l'envoi de l'instruction par le premier appareil au serveur : réception d'une entrée d'utilisateur par un des autres appareils du premier réseau et transmission de l'instruction au premier appareil.

9. Support lisible par ordinateur avec des instructions enregistrées sur celui-ci, qui, lorsqu'elles sont exécutées par un processeur, exécutent le procédé selon l'une des revendications 5 à 8.
